# EUROPEAN PATENT APPLICATION

(11) **EP 2 905 595 A1**
(43) Date of publication of application: **12.08.2015**
(21) Application number: 14154736.4
(22) Date of filing: 11.02.2014
(51) Int. Cl.: G01L 27/00, G01L 27/02

(54) **Gauge Testing Device**

(71) Applicant: Baumer Bourdon-Haenni SA, 41103 Vendome (FR)
(72) Inventor: Dr. Zips, Alf, 8280 Kreuzlingen (CH); Vion, Michael, 41260 La Chaussee Saint Victor (FR); Lecomte, David, 28160 Dangeau (FR); Mailhan, Catherine, 41100 Vendome (FR)
(74) Representative: Strauss, Steffen

(57) **Abstract**

The invention relates to a gauge testing device (100) for determining a deviation of a pointer on a scale of the gauge (111), comprising a pressure generator (107) for applying a predetermined pressure to the gauge (111); a camera (101) for taking a digital picture of the scale of the gauge (111) under the applied predetermined pressure; a pointer position detecting means (105) for detecting a pointer position on the basis of the digital picture; a calculating means (103) for calculating an indicated pressure on the basis of the pointer position and the scale of the gauge (111); and a deviation determining means (109) for determining a pressure deviation between the indicated pressure and the predetermined pressure.

## Description

The invention relates to the field of gauge testing devices for determining a deviation of a pointer on a scale of the gauge.

Gauges are widely applied for measuring a pressure within a liquid or a gas in a plurality of industrial applications. Gauges typically comprise a scale, wherein the pressure within the liquid or the gas is indicated by a pointer on the scale.

For deciding whether a gauge is suited for a desired application or for calibrating the gauge during manufacturing, characteristic values of the gauge, such as measurement accuracy or measurement linearity, can be determined and compared to a testing standard. The determination of characteristic values of the gauge is typically performed manually by an operator. The position of the pointer on the scale is usually determined by visual inspection which can lead to inaccurate and error-prone readings. Testing the gauge for compliance to a testing standard can therefore be time-consuming and can suffer from an insufficient accuracy of the determination of the characteristic values of the gauge. In one standard for example EN 837-1, a calibration approach for calibrating gauges is described.

It is the object of the invention to provide a gauge testing device and a gauge testing method for determining a deviation of a pointer on a scale of the gauge which allows for an automatic testing of the gauge with high accuracy and repeatability.

This object is achieved by the features of the independent claims. Further embodiments are apparent from the dependent claims, the description and the figures.

According to a first aspect, this problem is solved by a gauge testing device for determining a deviation of a pointer on a scale of the gauge, comprising a pressure generator for applying a predetermined pressure to the gauge; a camera for taking a digital picture of the scale of the gauge under the applied predetermined pressure; a pointer position detecting means for detecting a pointer position on the basis of the digital picture; a calculating means for calculating an indicated pressure on the basis of the pointer position and the scale of the gauge; and a deviation determining means for determining a pressure deviation between the indicated pressure and the predetermined pressure. Thus, the technical advantage is achieved that pointer positions, which are intermediate between two graduation marks of the scale, can be captured with high accuracy in an automatic and objective manner. Error-prone subjective readings of the pointer position by individual persons can be eliminated. An automatic testing of the gauge with high accuracy and repeatability is achieved.

In a preferred embodiment, the gauge testing device comprises a lighting means for illuminating the scale of the gauge. Thus, the technical advantage of providing repeatable lighting conditions is achieved. Furthermore, the gauge testing device can be used at low ambient light conditions.

In a further preferred embodiment, the gauge testing device comprises a holding means for holding the gauge on a central optical axis of the camera. Thus, the technical advantage of providing a digital picture with low distortion of the scale of the gauge can be achieved.

In a further preferred embodiment, the pointer position detecting means is configured to detect the pointer position by detecting a predetermined feature of the pointer within the digital picture. Thus, the technical advantage of an efficient and precise detection of the pointer position is achieved. The predetermined feature of the pointer can e.g. be a shape of the pointer or a colour of the pointer. For detecting the pointer position on the scale, feature extraction techniques or feature matching techniques can be employed.

In a further preferred embodiment, the pointer position detecting means is configured to extract a predetermined portion of the digital picture for detecting the pointer position. Thus, the technical advantage of a more efficient calculation of the scale pressure value is achieved. The predetermined portion of the digital picture can have different shapes, such as a rectangular shape of a curved shape.

In a further preferred embodiment, the pointer position detecting means is configured to distort the extracted portion of the digital picture. Thus, the technical advantage of a more efficient determination of the scale pressure value can be achieved. A portion of the digital picture having a curved shape can therefore be distorted to provide a distorted portion of the digital picture having a rectangular shape.

In a further preferred embodiment, the deviation determining means is configured to compare the pressure deviation with a predetermined threshold value. Thus, the technical advantage of an efficient comparison of the pressure difference with a predetermined pressure difference can be achieved. The predetermined pressure difference can be defined by a testing or calibration standard, such as the standard EN 837-1.

In a further preferred embodiment, the deviation determining means is configured to predetermine the threshold value on the basis of the type of the gauge. Thus, the technical advantage of using a threshold value attributed to a particular gauge is achieved

In a further preferred embodiment, the gauge testing device comprises a scale detecting means for determining the type of the scale on the basis of the digital picture. Thus, the technical advantage of testing various gauges is achieved, since the scale of the gauges can be detected automatically for calculating the indicated pressure value.

In a further preferred embodiment, the scale detecting means is configured to detect a position of a graduation mark by detecting a predetermined feature of the graduation mark within the digital picture. Thus, the technical advantage of an efficient detection of the position of the graduation mark is achieved. The predetermined feature of the graduation mark can e.g. be a shape of the graduation mark or a colour of the graduation mark. For detecting the position of the graduation mark, feature extraction techniques or feature matching techniques can be employed.

In a further preferred embodiment, the camera comprises a video camera for providing a sequence of digital pictures of the scale. Thus, the technical advantage of providing a continuous supervision of the gauge is achieved. The continuous supervision of the gauge can allow for an early detection of malfunctions of the gauge during the test. Furthermore the recorded pictures allows the tracing and documentation of the calibration process of all gauges.

According to a second aspect, this problem is solved by a gauge testing method for determining a deviation of a pointer on a scale of a gauge, comprising the steps of applying a predetermined pressure to the gauge; taking a digital picture of the scale of the gauge under the applied predetermined pressure; detecting a pointer position on the basis of the digital picture; calculating an indicated pressure on the basis of the pointer position and the scale of the gauge; and determining a deviation between the indicated pressure and the predetermined pressure. By this method also pointer positions, which are intermediate between two graduation marks of the scale, can be captured with high accuracy in an automatic and objective manner. Error-prone subjective readings of the pointer position by individual persons can be eliminated. An automatic testing of the gauge with high accuracy and repeatability is achieved. The gauge testing method can be performed by the gauge testing device. Further features of the gauge testing method can result from the functionality of the gauge testing device. The method can be implemented in hardware and/or software.

In a further preferred embodiment, the gauge testing method comprises the step of illuminating the scale of the gauge. Thus, the technical advantage of providing repeatable lighting conditions is achieved. Furthermore, the gauge testing device can be used at low ambient light conditions.

In a further preferred embodiment, the gauge testing method comprises the step of detecting the pointer position on the scale by detecting a predetermined feature of the pointer within the digital picture. Thus, the technical advantage of an efficient detection of the pointer position can be achieved. The predetermined feature of the pointer can e.g. be a shape of the pointer or a colour of the pointer. For detecting the pointer position on the scale, feature extraction techniques or feature matching techniques can be employed.

In a further preferred embodiment, the gauge testing method comprises the step of determining the type of the scale on the basis of the digital picture. Thus, the technical advantage of testing various gauges is achieved, since the scale of the gauges can be detected automatically.

Further embodiments of the invention will be described with respect to the following figures, in which:
- Fig. 1: shows a schematic diagram of a gauge testing device for determining a deviation of a pointer on a scale of the gauge;
- Fig. 2: shows a block diagram of a gauge testing method for determining a deviation of a pointer on a scale of the gauge;
- Fig. 3: shows a further diagram of a gauge testing device for determining a deviation of a pointer on a scale of the gauge;
- Fig. 4: shows a diagram of a method for testing a detection of a pointer position;
- Fig. 5: shows a diagram of a method for testing a detection of a pointer position;
- Fig. 6: shows a diagram of a scale of a gauge and a pointer of a gauge; and
- Fig. 7: shows a diagram of a control window of a computer program for controlling the gauge testing device.

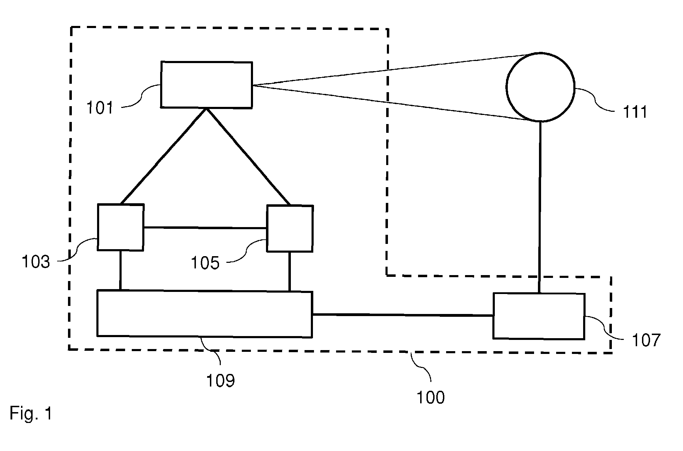

Fig. 1 shows a schematic diagram of a gauge testing device 100 for determining a deviation of a pointer on a scale of the gauge 111. The gauge testing device 100 comprises a pressure generator 107 for applying a predetermined pressure to the gauge 111. The exact value of the predetermined pressure can be determined by a calibrated digital pressure measuring device. A camera 101 takes a digital picture of the scale of the gauge 111 including the pointer under the applied predetermined pressure. The pointer position, e.g. the angle of the pointer, is detected on the basis of the digital picture by a pointer position detecting means 105. A calculating means 103 uses the detected pointer position and the scale of the gauge 111 for calculating a pressure that is indicated by the pointer on the scale. Finally, a deviation determining means 109 determines a pressure deviation between the indicated pressure by the pointer and the predetermined pressure applied by the pressure generator 107. This pressure deviation can be compared to known testing standards.

The camera 101 is connected to the calculating means 103 and to the pointer position detecting means 105. The calculating means 103 is connected to the pointer position detecting means 105. The deviation determining means 109 is connected to the calculating means 103 and to the pointer position detecting means 105. The calculating means 103, the pointer position detecting means 105, or the deviation determining means 109 can be connected to the pressure generator 107. The pressure generator 107 is connected to the gauge 111.

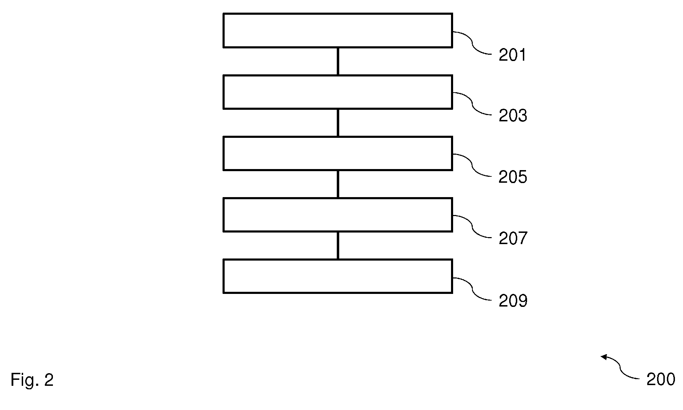

Fig. 2 shows a diagram of a gauge testing method 200 for determining a deviation of a pointer on a scale of the gauge. The gauge testing method 200 comprises the step 201 of applying a predetermined pressure to the gauge 111. Then, in next step 203, a digital picture of the scale of the gauge 111 under the applied predetermined pressure is taken by the camera 101. Then, in step 205, a pointer position is determined by analysing the digital picture taken by the camera 101. In step 207, an indicated pressure is calculated from the pointer position on the scale of the gauge 111 and the scale. Finally, in step 209, a deviation between the indicated pressure by the pointer and the predetermined pressure is determined in order to judge the correct functionality of the gauge and for comparing the gauge with standard testing requirements. The gauge testing method 200 allows for automatic testing the gauge 111 without having to manually adjust the pointer to an individual graduation mark.

The camera 101 may take a first digital picture of the scale for determining a pointer position and a second digital picture for automatically detecting the type of the scale for further calculations. An additional step of the gauge testing method 200 is illuminating the scale of the gauge 111. The gauge testing method 200 can be performed by the gauge testing device 100 in Fig. 1. Further features of the gauge testing method 200 can result from the functionality of the gauge testing device 100 in Fig. 1.

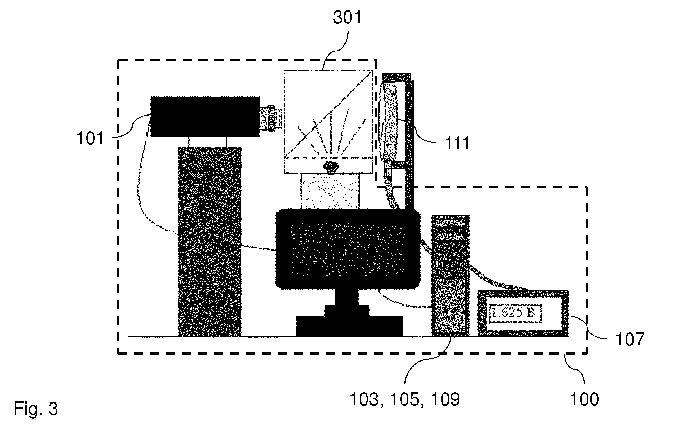

Fig. 3 shows a further diagram of a gauge testing device 100 for determining the deviation of a pointer on a scale of the gauge. Again, the gauge testing device 100 comprises a pressure generator 107 for applying a specified pressure and a camera 101 for taking a digital picture of the scale of the gauge 111 under this pressure. However, the pointer position detecting means 105, the calculating means 103 and the deviation determining means 109 are realized by a computer. In addition the gauge testing device 100 further comprises a lighting means 301 for illuminating the scale of the gauge 111.

The pressure generator 107 is configured to generate a pressure at a preselected pressure, e.g. 1.625 bar. The gauge 111 can be a manometer. The lighting means 301 can be realized as a light box. In order to increase the speed of the gauge or manometer checking, an automatic or semi-automatic system of the process can be employed.

The video camera as camera 101 can take photos of the gauge or manometer dial, when a desired span pressure is generated by the pressure generator 107. This numerical photography can be scanned by software, which can search and find the last and the first graduation marks or graduations and its centre, pointer, and can give back an angle between the first graduation mark and the pointer. This angle can be automatically converted into a pressure following full scale, due to the standard of 270°, and by analysing the full scale of the manometer as gauge 111 checked.

The accuracy of the pressure generator 107 can be exemplified as follows. The accuracy of the pressure sensor can have a range of 0+70Bar = 0.025%FS (17.5mBar). The minimum accuracy class for the gauge can be 1 x 0.8 = 0.8%FS. The pressure sensor can ensure an accuracy of 0.8%FS from 2.2 Bar to 70 Bar.

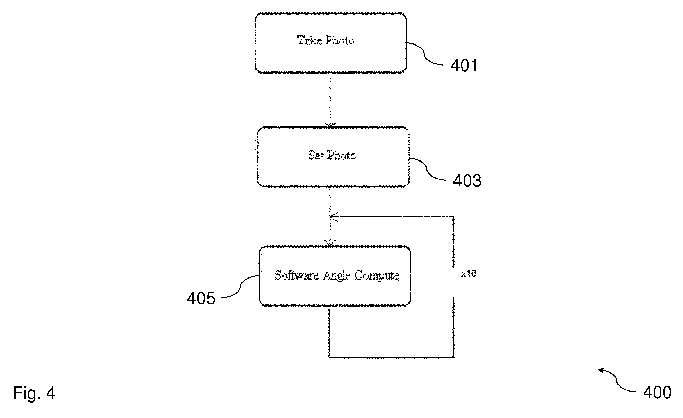

Fig. 4 shows a diagram of a method 400 for the detection of a pointer position. First, in step 401, the digital picture or photo is taken by the camera 101 under a specified pressure. In step 403, this digital picture is set as a digital picture or a photo in a computer memory. In step 405, the computer determines the pointer position on the basis of the data of the digital picture in the memory by a software angle computation of the pointer. The software angle computation in step 405 can be repeated several times in order to improve reliability, e.g. 10 times.

The method 400 can be additionally employed for testing a software capability. In testing of the software capability, the camera 101 can take a picture of a calibrated master gauge or a simulated master manometer, which has a printed pointer and a dial. This digital picture is sent to the computer. The software of the computer can proceed, e.g. ten times, to find the position or angle of the printed pointer. By analysing a difference between the multiple results obtained by the software and the printed position of the pointer, the capabilities of the camera and the software can be asserted in terms of statistical errors.

The positions chosen for the pointer to check a software capability can be determined in advance. For example, angles of 0°, 90°, 180° and 720 ° are chosen. The obtained results show that for a given digital picture the software process determines repeatedly a correct and precise position, namely each time perfectly the same position. For example the determined positions of the software for a first loop are 0.02°, 90.02°, 180.05°, and 270.06°. Using further loops, software global errorcan be lowered, e.g. 0%.

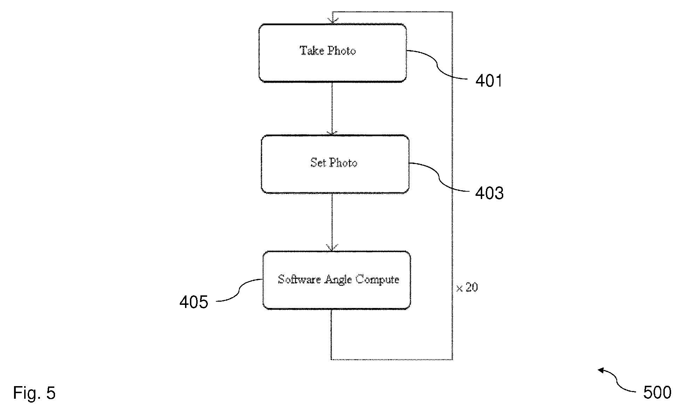

Fig. 5 shows a diagram of a method 500 for testing a detection of a pointer position. The method 500 comprises the step 401 of taking the digital picture. In step 403 and step 405, the digital picture is set to a memory and a pointer position is calculated by a software angle computation, respectively.

This method 500 can be employed for testing a process capability. The steps 401, 403, and 405 are repeated several times, e.g. twenty times. The capability of the entire process can be determined in step 401 by repeatedly taking a digital picture of the gauge 111 at a predetermined pressure and setting the digital picture as data in a memory in step 403. Each time, the pointer position is calculated by the software angle computation in step 405.

Finally, it is checked whether the calculated pointer positions are the same in each iteration. A graphical distribution of the obtained results by the process can be obtained for each angle, e.g. 0°, 90°, 180° and 270°. The results can indicate a global process typical error of the process, e.g. +/-0.125°, and aglobal process max error, e.g. 0.4°.

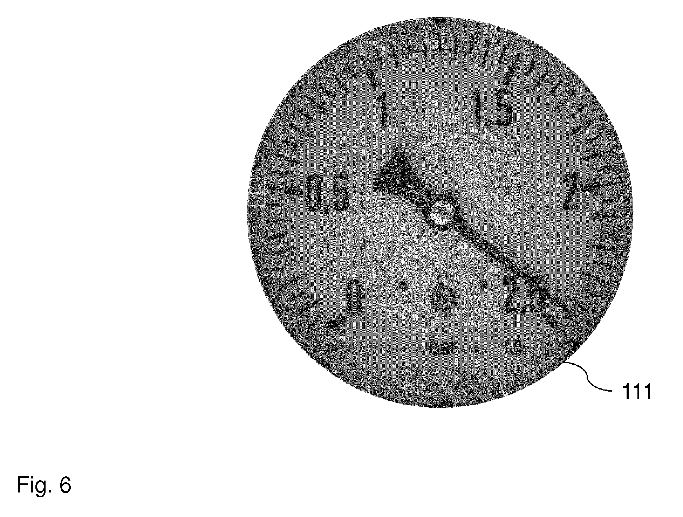

Fig. 6 shows a digital picture of the scale of the gauge 111 including a pointer. The digital picture represents a complete gradual file with gradual tools to detect and determine the positions or angles. Vision software can detect and read information from the digital picture using these gradual tools. Different kinds of gradual tools can be employed. For example, these kinds of tools allow for detecting an edge of the dial, a first and last graduation mark, a centre and the position of the pointer.

The main gradual tools used can be rulers, e.g. curved rulers and straight rulers. A straight ruler can be used to detect any kind of dark or bright point, border, or edge. The gradual tool can e.g. detect the first bright edge of the gauge 111. A curved ruler or gradual can detect the same as a straight ruler, but can be adapted to curved objects like dials. It can be useful to detect graduation marks or pointers. A curved ruler can detect a first graduation mark. A curved ruler can further detect the pointer. Furthermore, a formula can be employed. This gradual may not be adapted for detection. It can link other graduals by a mathematical formula to obtain a new point, centre, circle, position, or angle. A formula can compute a difference position or an angle between a pointer and a graduation mark which can be the first graduation mark.

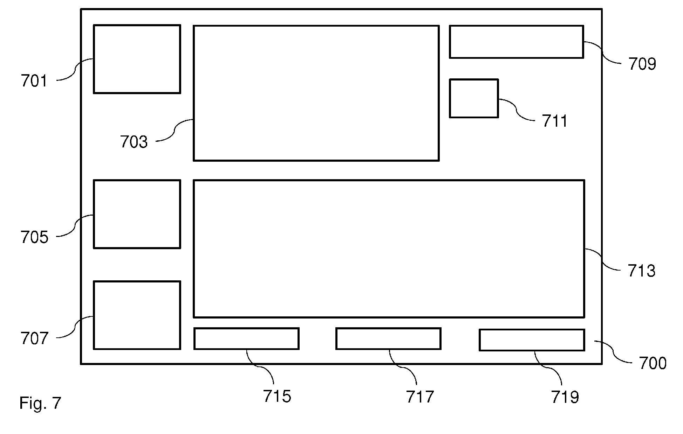

Fig. 7 shows a diagram of a control window 700 of a computer program for controlling the gauge testing device 100. The control window 700 comprises a fabrication order textbox 701, a client information textbox 703, a position textbox 705, a digital picture box 707, a point number selection box 709, a gauge class selection box 711, a deviation determination result table 713, an edit button 715, a start button 717, and a print button 719. The computer program controls the gauge testing device 100. The computer program can further be configured to perform the gauge testing method 200.

The fabrication order textbox 701 comprises a number of a fabrication order, a serial number of a gauge, and a name of an operator. The client information textbox 703 comprises a name of a client, a reference of a client, order information, denomination information, a serial number of a gauge, reference information, a name of an operator, or a test range with a lower pressure and an upper pressure. The position textbox 705 comprises a scale position or scale angle, e.g. a full scale position or full scale angle, and a test run number. The digital picture box 707 provides the digital picture of the scale of the gauge 111 to the operator.

The point number selection box 709 provides a means for selecting the number of test points per test run, e.g. 5, 6, 7, 9, 10, or 11 test points per test run. The gauge class selection box 711 provides a means for selecting a class or a type of the gauge, e.g. according to a testing standard. The class of the gauge can be e.g. 1, 0.6, or 1.6 according to the testing standard EN 837-1. The deviation determination result table 713 provides the deviation results per test point for a single test run. The deviation determination result table 713 provides also a scale pressure value, a corresponding minimum pressure, a corresponding maximum pressure, a pressure for increasing pressures, a pressure for decreasing pressures, a relative deviation for increasing pressures, a relative deviation for decreasing pressures, and a relative pressure hysteresis value. The edit button 715 is used for editing the test run. The start button 717 is used for starting the test run. The print button 719 is used to print the test settings.

The test run begins using an overpressure of 10% over the nominal maximum value of the gauge 111. Then, a digital picture of the gauge 111 is displayed. The operator can verify that the gauge 111 is functional using the digital picture.

Then, the pressure at a determined pressure value is generated and applied to the gauge 111. Each test point can be verified while increasing and decreasing the applied pressure. The results are compared to the class of the gauge and are shown in the deviation determination result table 713. The results are listed with respect to a test run performed with increasing pressure and with decreasing pressure. Test points not corresponding to the class of the gauge can be highlighted, e.g. in red colour. Test points corresponding to the class of the gauge can also be highlighted, e.g. in green colour. In case of cancelling the test run, the pressure returns to atmospheric pressure.

For calibrating the gauge testing device 100, a master mode is provided. Therefore, the test setup can be qualified to perform tests according to a predetermined testing standard. The master mode comprises testing four gauges with calibrated pointer positions, e.g. at angles of 0°, 90°, 180°, and 270°. The four gaugeare in sequence and consecutively arranged within the gauge testing device 100 and the corresponding positions, e.g. pointer positions, can be detected. Each test run can be stopped, halted, continued, and restarted. Selections of the options are input by the operator using a mouse or keyboard. Further, characteristics of the gauge 111 can be captured by scanning a corresponding barcode using a barcode scanner. A calibration approach of mechanical pressure gauges is defined in the EN 837-1 standard and respectively in ANSI standards. The EN 837-1 standard proposes two methods.

One method is to compare selected pointer positions with the applied pressure. The other method is to compare selected applied pressures with resulting pointer positions of the gauge 111 under test. For the other method the pressure readings can be interpolated between 1/4 and 1 /10 of the distance between two graduation or scale marks. However, the other method may not be suitable for a manual process as the visual interpolation between two graduation marks can imply uncertainties which may not be controlled.

The gauge testing device 100 benefits from an automatic reading of the pointer position on the gauge 111, since a reading of the pointer in all positions is enabled and a manual interpolation by a visual inspection of a user is eliminated. A further advantage is that the applied pressure has not to be controlled such that the pointer of the gauge is on a particular graduation mark. Even in case that the pointer is between two graduation marks, a pressure deviation is determined with the desired accuracy. This proceeding provides for a fast measuring and calibration time.

Furthermore, the EN837-1 standard specifies the number of points to be tested or measured depending on the accuracy class of the gauge. When using the first method, the main indications may be applied, which can give for specific pressure ranges more measuring points than desired by the standard.

The gauge testing device 100 reduces the effort in calibration, since it is able to apply equidistant pressure points to cover a complete 270° scale regardless of the gauge scale. Thus, the gauge testing device 100 optimizes the number of measuring points with higher accuracy. A further advantage is that by applying an automatic reading system, the digital pictures of the camera 101 can be recorded and a proof of the accuracy of the gauge 111 can be provided to an operator or customer.

All features discussed or shown with respect to single embodiments of the invention can be provided in any combination in order to realize their advantageous effects concurrently.

The scope of the invention is given by the patent claims and is not restricted by the features discussed in the description or shown in the figures.

## Claims

1. Gauge testing device (100) for determining a deviation of a pointer on a scale of the gauge (111), comprising:
a pressure generator (107) for applying a predetermined pressure to the gauge (111);
a camera (101) for taking a digital picture of the scale of the gauge (111) under the applied predetermined pressure;
a pointer position detecting means (105) for detecting a pointer position on the basis of the digital picture;
a calculating means (103) for calculating an indicated pressure on the basis of the pointer position and the scale of the gauge (111); and
a deviation determining means (109) for determining a pressure deviation between the indicated pressure and the predetermined pressure.

2. Gauge testing device (100) according to claim 1, further comprising a lighting means (301) for illuminating the scale of the gauge (111).

3. Gauge testing device (100) according to any of the preceding claims, further comprising a holding means for holding the gauge (111) on a central optical axis of the camera (101).

4. Gauge testing device (100) according to any of the preceding claims, wherein the pointer position detecting means (105) is configured to detect the pointer position by detecting a predetermined feature of the pointer within the digital picture.

5. Gauge testing device (100) according to any of the preceding claims, wherein the pointer position detecting means (105) is configured to extract a predetermined portion of the digital picture for detecting the pointer position.

6. Gauge testing device (100) according to claim 5, wherein the pointer position detecting means (105) is configured to distort the extracted portion of the digital picture.

7. Gauge testing device (100) according to any of the preceding claims, wherein the deviation determining means (109) is configured to compare the pressure deviation with a predetermined threshold value.

8. Gauge testing device (100) according to claim 7, wherein the deviation determining means (109) is configured to predetermine the threshold value on the basis of the type of the gauge (111).

9. Gauge testing device (100) according to any of the preceding claims, wherein the gauge testing device (100) comprises a scale detecting means for determining the type of the scale on the basis of the digital picture.

10. Gauge testing device (100) according to claim 9, wherein the scale detecting means is configured to detect a position of a graduation mark by detecting a predetermined feature of the graduation mark within the digital picture.

11. Gauge testing device (100) according to any of the preceding claims, wherein the camera (101) comprises a video camera for providing a sequence of digital pictures of the scale.

12. Gauge testing method (200) for determining a deviation of a pointer on a scale of a gauge (111), comprising the steps:
applying (201) a predetermined pressure to the gauge (111);
taking (203) a digital picture of the scale of the gauge (111) under the applied predetermined pressure;
detecting (205) a pointer position on the basis of the digital picture;
calculating (207) an indicated pressure on the basis of the pointer position and the scale of the gauge (111); and
determining (209) a deviation between the indicated pressure and the predetermined pressure.

13. Gauge testing method (200) according to claim 12, comprising the step of illuminating the scale of the gauge (111).

14. Gauge testing method (200) according to claim 12 or 13, comprising the step of detecting the pointer position on the scale by detecting a predetermined feature of the pointer within the digital picture.

15. Gauge testing method (200) according to claim 12, 13 or 14, comprising the step of determining the type of the scale on the basis of the digital picture.
